**Europäisches Patentamt**

**European Patent Office**

**Office européen des brevets**

(19)

(11) Veröffentlichungsnummer : **0 474 225 B1**

(12)
# EUROPÄISCHE PATENTSCHRIFT

(45) Veröffentlichungstag der Patentschrift :
**02.08.95 Patentblatt 95/31**

(51) Int. Cl.$^6$ : **G01V 1/00**

(21) Anmeldenummer : **91114961.5**

(22) Anmeldetag : **05.09.91**

(54) **Akustisches Verfahren zur Ortung unterirdischer Leitungen.**

(30) Priorität : **06.09.90 DE 4028299**

(43) Veröffentlichungstag der Anmeldung :
**11.03.92 Patentblatt 92/11**

(45) Bekanntmachung des Hinweises auf die
Patenterteilung :
**02.08.95 Patentblatt 95/31**

(84) Benannte Vertragsstaaten :
**AT BE CH DE DK FR GB IT LI NL SE**

(56) Entgegenhaltungen :
**DE-A- 3 305 208**
**US-A- 3 979 724**
**PATENT ABSTRACTS OF JAPAN, Bd. 13, Nr.**
**332 (P-905)(3680) 26. Juli 1989; & JP-A-196584**

(73) Patentinhaber : **Sewerin, Peter**
**Fritz-Blank-Strasse 88**
**D-33334 Gütersloh (DE)**

(72) Erfinder : **Sewerin, Peter**
**Fritz-Blank-Strasse 88**
**W-4830 Gütersloh (DE)**
Erfinder : **Sewerin, Sven**
**Fritz-Blank-Strasse 88**
**W-4830 Gütersloh (DE)**

(74) Vertreter : **Hilleringmann, Jochen, Dipl.-Ing. et al**
**Patentanwälte**
**von Kreisler-Selting-Werner,**
**Postfach 10 22 41**
**D-50462 Köln (DE)**

**Beschreibung**

Die Erfindung betrifft ein akustisches Verfahren zur Ortung unterirdischer Leitungen nach dem Oberbegriff des Anspruchs 1, wie aus US-A-3 979 724 bekannt.

Zur Ortung von unterirdischen Leitungen, wie z.B. Wasser- oder Gasleitungen, sind eine Vielzahl von Verfahren bekannt. Unterirdische Leitungen, z.B. Gas- oder Wasserleitungen, sind im allgemeinen mit Hilfe elektrischer Verfahren problemlos zu orten, wenn die Leitung metallisch ist. Die Ortung erfolgt anhand des magnetischen Kraftfeldes, das durch einen in der zu ortenden Leitung erzeugten Strom aufgebaut wird. Diese Möglichkeit entfällt, sobald es sich um Leitungen aus elektrisch nicht leitenden Materialien (PE, PVC, Ton, Zement) handelt.

Zur Ortung derartiger Leitungen wird neuerdings das Radar-Verfahren angewendet. Es beruht auf der Reflexion von Radarstrahlen an den unterirdischen Leitungen. Schwierigkeiten dieser Methode bestehen in der begrenzten Eindringtiefe der Radarstrahlen ins Erdreich und in der Tatsache, daß nicht allein die gesuchte Leitung, sondern auch sonstige Inhomogenitäten des Erdreichs, wie z.B. Steine oder Hohlräume, angezeigt werden, so daß die Interpretation der Meßergebnisse nicht immer einfach ist. Das Verfahren erfordert einen vergleichsweisen hohen technisch/elektronischen Aufwand.

Zur Ortung nichtmetallischer unterirdischer Leitungen werden auch akustische Verfahren verwendet. Eines dieser Verfahren beruht darauf, die Leitung oder das darin befindliche (flüssige oder gasförmige) Medium durch einen Schwingungserzeuger in periodische mechanische Schwingungen, insbesondere Sinusschwingungen, zu versetzen und die Amplitude, d.h. die Stärke der von der Leitung ausgehenden Körperschallwellen an der Erdoberfläche mittels mindestens eines über die Erdoberfläche bewegbaren Körperschallaufnehmers (Mikrophon oder Geophon) zu messen. Befindet sich der Körperschallaufnehmer unmittelbar oberhalb der Leitung, ist die Amplitude der Körperschallwelle an der Erdoberfläche am größten. Es werden also die Stellen der Erdoberfläche maximaler Amplitude der Körperschallwellen detektiert (Intensitätsmethode) . Diese Intensitätsmethode ist insofern nachteilig, da im Bereich um die Leitung herum keine eindeutigen Amplitudenveränderungen bzw. -vergrößerungen mehr meßbar sind, weshalb die Leitung nicht mit der erforderlichen Genauigkeit geortet werden kann. Ferner hängt die Amplitude der Körperschallwelle von der Beschaffenheit des Erdbodens, insbesondere von dessen Inhomogenitäten ab.

Aus US-A-3 979 724 ist ein Verfahren zur Ortung des unteren Endes einer in einem Bohrloch angeordneten Leitung bekannt. Mit diesem Verfahren läßt sich das Ende des Bohrlochs lokalisieren. Die Leitung wird impulsartig mechanisch erregt und mittels mehrerer Körperschallaufnehmer auf der Erdoberfläche werden die vom unteren Ende ausgehenden Schallwellen detektiert. Die Ortung des Leitungsendes erfolgt anhand der Laufzeitdifferenzen, um die die Körperschallaufnehmer zeitlich versetzt die Schallwellen erfassen.

Aus DE-A-33 05 208 ist ein akustisches Ortungsverfahren für unterirdische Leitungen bekannt, bei dem der Erdoben örtlich in mechanische Schwingungen versetzt wird, um die Leitung zu erregen. Ein mit der Leitung mechanisch verbundener Körperschallaufnehmer erfaßt die mechanische Erregung der Leitung. Durch Veränderung der Lage des mechanischen Schwingungserzeugers auf der Erdoberfläche verändert sich die Größe des Meßsignals des Körperschallaufnehmers. Bei maximalem Meßsignal befindet sich der Schwingungserzeuger direkt über der zu ortenden Leitung.

Ein anderes akustisches Meßverfahren ist aus Patent Abstracts of Japan, JP-A-196 584 bekannt. Bei diesem Verfahren wird die Zeitdifferenz zwischen der Schwingungserzeugung der Leitung und der Erfassung des von der Leitung ausgehenden Körperschalls durch einen auf der Erdoberfläche angeordneten Sensor ermittelt. Der Sensor wird so lange auf der Erdoberfläche verschoben, bis die Laufzeitdifferenz minimal ist. Da die Laufzeitdifferenz neben der Entfernung des Sensors von der unterirdischen Leitung auch von der Entfernung des Sensors zum Ort der Schwingungseinleitung der Leitung ist, kann aufgrund der Position des Sensors bei kürzester Laufzeitdifferenz allein keine zuverlässige Aussage über den Verlauf der Leitung getroffen werden.

Der Erfindung liegt die Aufgabe zugrunde, ein Verfahren zur Ortung unterirdischer Leitungen nach Art des Oberbegriffs des Patentanspruchs 1 zu schaffen, das die obigen Nachteile beseitigt und eine zuverlässige und genaue Ortung der unterirdischen Leitung erlaubt.

Zur Lösung dieser Aufgabe wird mit der Erfindung ein Verfahren mit den Merkmalen des Anspruchs 1 vorgeschlagen; die Merkmale vorteilhafter Weiterbildungen des Verfahrens sind jeweils in den abhängigen Ansprüchen aufgeführt.

Nach der Erfindung wird die Leitung und/oder das darin befindliche (flüssige oder gasförmige) Medium gegebenenfalls von einem Schwingungserzeuger impulsartig in mechanische Schwingungen versetzt. Diese mechanischen Schwingungen werden nicht kontinuierlich sondern intermittierend aufgebracht. Unter einer mechanischen Schwingung im Rahmen dieser Erfindung ist ein mechanischer Impuls oder ein Druckstoß zu verstehen, der auf die Leitung aufgebracht oder in diese eingespeist wird und sich dann auf der Leitung fortbewegt. Der mechanische Impuls wandert entlang der zu ortenden Leitung auf dieser. Dabei werden von diesem laufenden Impuls Körperschallwellen ins Erdreich induziert, die durch dieses hindurchtreten und "von unten" auf die Erdoberfläche auftreffen, wo sie detektiert werden können. Aufgrund der Geschwindigkeit, mit der sich der mechanische Impuls (die mechanische Welle) auf der Leitung vorbewegt, geht die an einer bestimmten Stelle der Erdoberfläche detektierte Körperschallwelle von einem Punkt der Leitung aus, der in Bewegungsrichtung des mechanischen Impulses auf der Leitung betrachtet vor dieser Stelle der Erdoberfläche liegt. Der der Leitung bzw. deren Inhalt aufgeprägte mechanische Impuls erzeugt im Erdreich bei seiner Bewegung auf der Leitung eine Körperschall-Bugwelle, die sich in Impulsausbreitungsrichtung ausbreitet. Diese Körperschall-Bugwelle entsteht rotationssymmetrisch um die zu ortende Leitung herum; die Körperschall-Bugwelle ist insofern mit einem Kegelmantel vergleichbar, wobei die Spitze des Kegels dem sich ausbreitenden mechanischen Impuls entspricht. Der Verlauf der Schnittlinie des "Schallkegels" mit der Erdoberfläche läßt auf die Stelle der Erdoberfläche schließen, unter der die Leitung verläuft. Diese Schnittlinie, im folgenden auch Körperschall-Oberflächenlinie genannt, wird mit Hilfe der Körperschallaufnehmer punktweise detektiert. Entlang der Körperschall-Oberflächenlinie treffen all die Körperschallwellen auf, die von demjenigen Punkt der Leitung ausgehen, an dem sich der mechanische Impuls gerade befindet.

Mit dem erfindungsgemäßen Verfahren ist ein Punkt auf der Erdoberfläche ermittelbar, der - in der Projektion betrachtet - auf der zu ortenden Leitung liegt. Zur Ermittlung dieses Punktes sind keine Amplitudenmessungen der an der Erdoberfläche austretenden Körperschallwellen erforderlich. Vielmehr wird die Körperschall-Oberflächenlinie dadurch bestimmt, daß die Ankunft von Körperschallwellen an der Erdoberfläche detektiert wird, ohne daß die Amplitude herangezogen wird. Zur Leitungsortung wird also gerade keine Intensitätsmessung vorgenommen, so daß die den Intensitätsmethoden innewohnenden Nachteile, keinen scharf begrenzten Bereich maximaler Intensität messen zu können, nicht gegeben sind. Die Intensität der an der Erdoberfläche detektierten Körperschallwellen spielt allenfalls insoweit eine Rolle, als zur Vermeidung des Einflusses von Rauschen ein bestimmter Mindestpegel erreicht sein muß, damit die Schallwelle als von dem Impuls auf der Leitung erzeugt betrachtet werden kann. Das beschriebene Verfahren ist unabhängig von dem Material des Leitungsrohres einsetzbar.

Die Erfindung macht sich die Erkenntnis zunutze, die sich entlang der Leitung auf der Erdoberfläche vorbewegende Körperschall-Oberflächenlinie durch mehrere entsprechend angeordnete Körperschallaufnehmer, auf die sich die Oberflächenlinie zubewegt, zu detektieren, um ausgehend von dieser Oberflächenlinie den zu ortenden Leitungspunkt zu ermitteln. Dies ist nur dann möglich, wenn auf die Leitung einzelne mechanische Impulse gegeben werden. Die Anordnung und Anzahl der Körperschallaufnehmer muß derart sein, daß der das Erdreich durchdringende auf die Erdoberfläche auftreffende Körperschall von einer zur Bestimmung des Verlaufs der Körperschall-Oberflächenlinie ausreichenden Anzahl von Körperschallaufnehmern erfaßt wird.

Der vollständige Verlauf der Körperschall-Oberflächenlinie braucht jedoch nicht ermittelt zu werden, um auf den zu ortenden Leitungspunkt zu schließen. Vielmehr genügt bereits die Kenntnis einzelner auf der Oberflächenlinie liegender Punkte, um ohne den Verlauf der Körperschall-Oberflächenlinie im einzelnen zu kennen, den zu ortenden Leitungspunkt bzw. die diesem entsprechende Stelle auf der Erdoberfläche ermitteln zu können.

Die Impulserzeugung kann auf die unterschiedlichsten Weisen entweder mit von Hand zu betätigenden Einrichtungen oder mit dafür vorgesehenen Vorrichtungen, allgemeinhin Schwingungserzeuger genannt, erfolgen. Bei Flüssigkeiten führenden Leitungen erfolgt die Erregung von Medium und Leitung vorteilhafterweise durch schlagartige (plötzliche) Unterbrechung der Strömung, z.B. durch Absperren der Leitung mit Hilfe eines Schiebers o.dgl. Die kinetische Energie des strömenden Mediums wird dabei für die Druckstoßerzeugung ausgenutzt. Ein Druckstoß im Medium könnte auch durch schlagartiges Öffnen der Leitung erzeugt werden. Als Schwingungserzeuger sind im weitesten Sinn alle Vorrichtungen zu verstehen, mit denen eine Druckwelle auf der Leitung und/oder in dem die Leitung ausfüllenden Medium erzeugt werden kann. Als Ankopplungspunkte für einen Schwingungserzeuger sind alle zugänglichen Leitungsteile (z.B. Hydranten, Hausanschlüsse) brauchbar.

Es kann vorgesehen sein, daß die von den Körperschallaufnehmern erzeugten Detektionssignale erst ab einer vorgegebenen Mindestamplitude zur Bestimmung des Verlaufs der Körperschall-Oberflächenlinie herangezogen werden. Erst wenn die an der Oberfläche gemessenen Körperschallwellen eine Mindeststärke aufweisen, wird angenommen, daß sie aufgrund der mechanischen Erregung der Leitung und nicht durch störende Rauscheinflüsse entstanden sind. Diese Schwellwertvorgabe führt zu zuverlässigeren Ergebnissen, was die Detektion von auf der Körperschall-Oberflächenlinie liegenden Punkten betrifft.

Vorteilhafterweise erfolgt die Detektion der Körperschallwellen an der Oberfläche mittels der Körperschallaufnehmer nach jeweils einer impulsartigen Erregung der Leitung. Nach dem Durchlaufen der Körperschall-Bugwellen im Erdreich und damit der Körperschall-Oberflächenlinie wird die Leitung der nächsten impulsartigen Erregung ausgesetzt. Bei unveränderter Anordnung der Körperschallaufnehmer auf der Erdoberfläche über mehrere impulsartige Erregungen der Leitung kann der Verlauf der Körperschall-Oberflächenlinie mit größerer Zuverlässigkeit ermittelt werden. Durch die Körperschallaufnehmer werden einzelne auf dieser Oberflächenlinie liegende Punkte ermittelt, aus denen der Verlauf der Körperschall-Oberflächenlinie auf mathematisch geometrische Weise bestimmt wird.

Die einzelnen auf der Körperschall-Oberflächenlinie liegenden Punkte werden anhand der Zeitdifferenzen, mit denen die Körperschallaufnehmer die Detektion von Körperschallwellen anzeigende Ausgangssignale erzeugen, und der relativen Positionen der Körperschallaufnehmer untereinander bestimmt. Es sei angenommen, daß die Körperschallaufnehmer zufälligerweise derart auf dem Erdboden verteilt angeordnet sind, daß sämtliche Körperschallaufnehmer gleichzeitig ein die Detektion einer Körperschallwelle an der Erdoberfläche anzeigendes Ausgangssignal erzeugen. Dies ist ein Zeichen dafür, daß sämtliche Körperschallaufnehmer auf der Körperschall-Oberflächenlinie liegen; die Oberflächenlinie geht also durch sämtliche Körperschallaufnehmer "hindurch". Geben die Körperschallaufnehmer die Ausgangssignale zeitlich aufeinanderfolgend ab und sind ihre relativen Positionen bekannt, dann können die einzelnen auf der Körperschall-Oberflächenlinie liegenden Punkte anhand der Zeitdifferenzen bestimmt und aus diesen Punkten wiederum der Verlauf der Oberflächenlinie ermittelt werden oder direkt derjenige Punkt bzw. diejenige Stelle auf der Erdoberfläche bestimmt werden, unter der die Leitung verläuft.

Vorteilhafterweise sind die Körperschallaufnehmer entlang einer gemeinsamen Geraden angeordnet; vorzugsweise werden die Körperschallaufnehmer in einem Raster angeordnet.

Wie bereits oben erwähnt, wird anhand des ermittelten Verlaufs der Körperschall-Oberflächenlinie oder anhand einzelner Punkte dieser Linie auf denjenigen Punkt bzw. diejenige Stelle der Oberfläche geschlossen, die - in Projektion betrachtet - auf der zu ortenden Leitung liegt. Je nachdem, ob die Leitung parallel oder in einem (spitzen) Höhenwinkel zur Erdoberfläche verläuft, weist die Körperschall-Oberflächenlinie unterschiedliche hyperbelartige Verläufe auf. Der Scheitelpunkt der Linien liegt dem Punkt der Leitung, von dem der mechanische Impuls ausgeht, am nächsten; in der diesem Punkt abgewandten Richtung gehen die beiden Hyperbeläste auseinander; die Hyperbel ist also in zur Ausbreitung des mechanischen Impulses entgegengesetzter Richtung geöffnet. Anhand des Hyperbelverlaufs werden die beiden Asymptoten bestimmt. Der Winkel zwischen den beiden Asymptoten (Hyperbeläste) ist durch das Verhältnis zwischen der Körperschallgeschwindigkeit auf bzw. in der Leitung (Impuls-Laufgeschwindigkeit) und derjenigen im Erdreich bestimmt. Der Schnittpunkt der beiden Asymptoten ist gleich dem Punkt der Erdoberfläche, der in Projektion betrachtet auf der Leitung liegt. Somit kann mit dem erfindungsgemäßen Verfahren nicht nur der Bereich der Erdoberfläche bestimmt werden, unterhalb dessen die Leitung verläuft, sondern es kann ferner anhand der Lage oder Ausrichtung der Hyperbel auf der Erdoberfläche die Richtung des Leitungsverlaufs in diesem Punkt bestimmt werden. Bei Betrachtung in Impulsausbreitungsrichtung verläuft die Leitung zumindest unmittelbar vor dem georteten bzw. auf geometrisch/mathematische Weise ermittelten Leitungspunkt in Richtung der Symmetrieachse der Hyperbeläste.

Nach dem erfindungsgemäßen Verfahren werden einzelne Punkte auf der Erdoberfläche, durch die hindurch die Leitung verläuft, ermittelt. Der gesamte Leitungsverlauf kann also durch Ermittlung mehrerer derartiger Punkte geortet werden.

Nachfolgend wird anhand der Figuren ein Ausführungsbeispiel der Erfindung näher erläutert. Im einzelnen zeigen:

Fig. 1    einen Längsquerschnitt durch das Erdreich im Bereich der Erdoberfläche mit einer unterirdischen Leitung,

Fig. 2    die Draufsicht auf die Erdoberfläche, unter der die Leitung gemäß Fig. 1 verläuft und

Fig. 3    eine schematische Darstellung zur Verdeutlichung der Ermittlung eines Leitungspunkts aus vier Meßwerten.

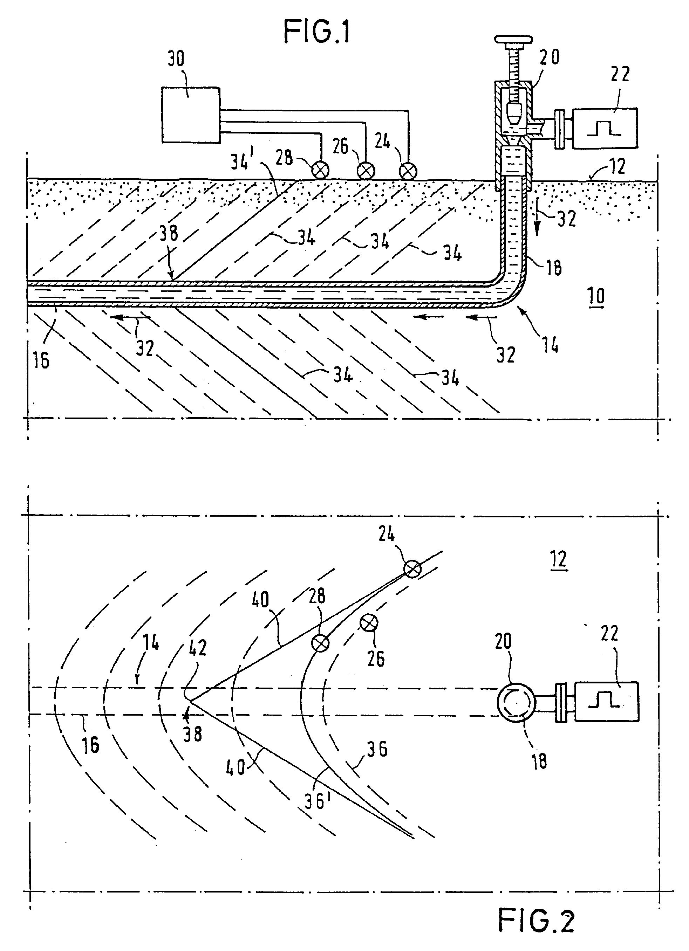

In den Figuren ist das Verfahren zur Ortung einer unterirdischen Leitung schematisch dargestellt. Gemäß Fig. 1 verläuft im Erdboden 10 in einer bestimmten Tiefe parallel zur Erdoberfläche 12 eine Wasserleitung 14, die einen horizontal verlaufenden Leitungsabschnitt 16 und einen damit verbundenen vertikalen Leitungsabschnitt 18 aufweist. Das obere Ende des vertikalen Leitungsabschnitts 18 ist mit einem Hydranten 20 verbunden, an dem ein Schwingungserzeuger 22 zum Erzeugen impulsartiger mechanischer Schwingungen angeschlossen ist. Der Schwingungserzeuger 22 erzeugt mechanische Impulse, die auf den Hydranten 20 und über diesen auf die Wasserleitung 14 gegeben werden. Auf diese Weise wird die Wasserleitung 14 mit mechanischen Impulsen beaufschlagt. Auf der Erdoberfläche 12 sind mehrere Körperschallaufnehmer 24,26 und 28 angeordnet. Bei den Körperschallaufnehmern handelt es sich um z.B. piezoelektrische Geophone, deren Ausgänge elektrisch mit einer Signalauswerte- und Recheneinheit 30 verbunden sind.

Bei Erzeugung eines mechanischen Impulses durch den Schwingungserzeuger 22 wandert dieser auf der Wasserleitung 14 in der durch die Pfeile 32 angegebenen Richtung. Der mechanische Impuls, bei dem es sich um eine sich entlang der Wasserleitung 14 bewegende elastische Verformung derselben handelt, erzeugt in dem die Wasserleitung umgebenden Erdreich 10 Körperschallwellen, die sich nach Art von Bugwellen im Erdreich um die Wasserleitung 14 herum ausbreiten. Die Körperschall-Wellenfront (Bugwelle) bewegt sich in Richtung der Impulsausbreitung, d.h. in Richtung des Wasserleitungsverlaufs vor, wobei sie kegelförmig und in einem spitzen Winkel zur Wasserleitung 14 verläuft. Dies liegt daran, daß die Körperschallgeschwindigkeit im Erdreich 10 niedriger ist als die Bewegungsgeschwindigkeit des Impulses entlang der Wasserleitung 14 (Körperschallgeschwindigkeit in der Wasserleitung). Die sich vorbewegende Körperschall-Wellenfront ist in Fig. 1 durch die mit 34 bezeichneten gestrichelten Linien dargestellt.

Der Verlauf der Körperschall-Wellenfronten 34 ist kegelförmig. Diese Kegel werden von der Erdoberfläche 12 "geschnitten". Die von dem Impuls auf der Leitung 14 erzeugten Körperschallwellen, die sich entlang der gestrichelten Linie 34 ausbreiten, treffen entlang der Schnittlinie zwischen dem Kegel und der Erdoberfläche 12 auf dieser auf. Damit entstehen auf der Erdoberfläche 12 die in Fig. 2 mit 36 bezeichneten Oberflächenlinien, entlang derer die Körperschallwellen aus dem Erdboden 10 heraustreten. Die Linien 36 werden nachfolgend deshalb Körperschall-Oberflächenlinien genannt. Genauso wie sich die Körperschall-Wellenfront 34 (Bugwelle) im Erdreich 10 vorbewegt, bewegt sich auf der Erdoberfläche 12 die Körperschall-Oberflächenlinie 36 vor.

Die sich vorbewegende Körperschall-Oberflächenlinie 36 erreicht nacheinander oder gegebenenfalls auch gleichzeitig die Körperschallaufnehmer 24-28. Gemäß Fig. 2 detektiert der Körperschallaufnehmer 26 als erster die heranrückende Oberflächenlinie 36. Anhand des Ausgangssignals des Körperschallaufnehmers 26 erkennt die Signalauswerte- und Recheneinheit 30, daß die Körperschall-Oberflächenlinie 36 den Körperschallaufnehmer 26 passiert. In der Signalauswerteeinheit 30 wird von diesem Zeitpunkt an die Zeit ermittelt, die verstreicht, bis der nächste und alle weiteren Körperschallaufnehmer ansprechen. In Fig. 2 ist der Fall eingezeichnet, daß die beiden weiteren Körperschallaufnehmer 24 und 28 gleichzeitig ansprechen. Daraus ergibt sich, daß die beiden Körperschallaufnehmer 24 und 28 auf der Körperschall-Oberflächenlinie 36' liegen, entlang derer diejenigen Körperschallwellen auf die Erdoberfläche 12 auftreffen, die sich im Erdreich 10 entlang der Körperschall-Bugwellenausbreitungslinie 34' ausgebreitet haben. Körperschallwellen, die sich entlang dieser Linie 34' ausbreiten, werden in dem mit 38 bezeichneten Punkt der Leitung 14 erzeugt. Der Punkt 38 entspricht derjenigen Stelle der Leitung 14, an der sich gerade der mechanische Impuls befindet.

Bei bekannter Anordnung der Körperschallaufnehmer 24-28 kann anhand der Zeitdifferenzen, um die die Körperschallaufnehmer verzögert ansprechen, der Verlauf der Körperschall-Oberflächenlinie 36' ermittelt werden. Dazu sind jedoch im Regelfall mehr als die in den Figuren eingezeichneten drei Körperschallaufnehmer erforderlich. Der tatsächliche Verlauf der Oberflächenlinie 36' kann unter Umständen auch erst nach mehrmaliger Umstellung der Körperschallaufnehmer 24-28 ermittelt werden. Die weitere Beschreibung des Verfahrens geht davon aus, daß durch die Körperschallaufnehmer eine Vielzahl von auf derselben Körperschall-Oberflächenlinie 36' liegenden Punkten bestimmt worden sind.

Als nächstes wird mittels mathematischer Methoden diejenige Körperschall-Oberflächenlinie 36' bestimmt, die sämtliche zuvor bestimmten Punkte auf der Erdoberfläche 12 durchkreuzt. Bei dieser Oberflächenlinie 36' handelt es sich um eine Hyperbel, die in zur Impulsausbreitung entgegengesetzten Richtung offen ist (siehe Fig. 2). Der Verlauf der Oberflächenlinie 36' ergibt sich aus der Schnittlinie der Oberfläche 12 mit den von der Leitung 14 ausgehenden Schallkegeln. Anhand des so ermittelten Oberflächenlinienverlaufs werden die zugehörigen Asymptoten 40 ermittelt. Diese Asymptoten 40 schneiden sich in einem Punkt 42, der in Projektion betrachtet (siehe Fig. 2) auf der zu ortenden Leitung 14 liegt. Mit dem oben beschriebenen Verfahren läßt sich aber nicht nur der Punkt 42 auf der Erdoberfläche ermitteln, unterhalb dessen die Leitung 14 verläuft; vielmehr läßt die Form der Körperschall-Oberflächenlinie 36' auch noch eine Aussage darüber zu, in welcher Richtung die Leitung 14 im Punkt 42 verläuft. Aufgrund der Öffnung der Hyperbel in zur Ausbreitung des mechanischen Impulses entgegengesetzter Richtung läßt sich die Aussage treffen, daß die Leitung 14 den Punkt 38 aus der in zur Öffnung der Hyperbel entgegengesetzten Richtung erreicht.

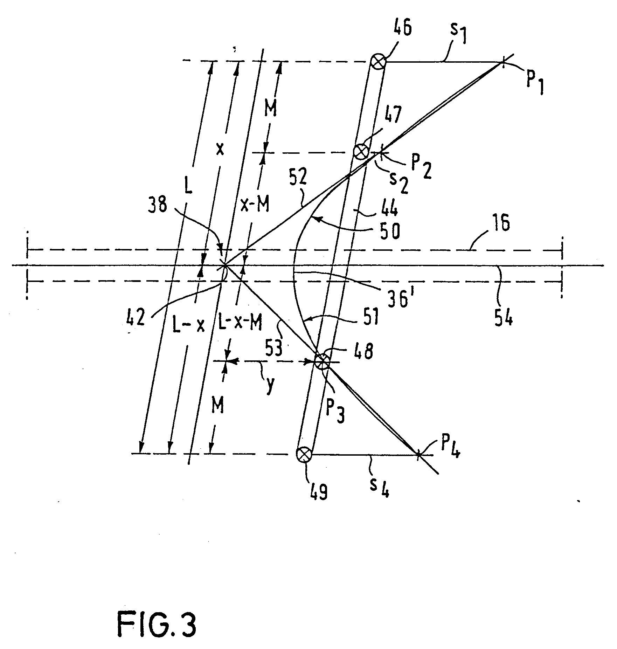

Anhand von Fig. 3 soll nachfolgend beschrieben werden, wie aus den Meßsignalen der Körperschallaufnehmer ein Leitungspunkt ermittelt wird, ohne zuvor den Verlauf der Körperschall-Oberflächenlinie 36' zu bestimmen.

Auf einer geradlinigen "Meßlatte" 44 der Länge L sind vier Mikrophone 46-49 paarweise angeordnet, wobei die beiden Mikrophonpaare an den Enden der Meßlatte 44 in definierten Abständen voneinander entfernt angeordnet sind und die Mikrophone eines jeden Paares jeweils den gleichen Abstand M voneinander aufweisen. Sämtliche Mikrophone 46-49 sind elektrisch mit der Signalauswerte- und Recheneinheit 30 verbunden. Die Meßlatte 44 liegt auf der Oberfläche auf, so daß die Mikrophone 46-49 die sich auf der Erdoberfläche vorbewegende Körperschall-Oberflächenlinie 36 (Hyperbel) erfassen. Je nach der relativen Lage der Meßlatte 44 und der Hyperbel werden die auf die Erdoberfläche aufgesetzten Mikrophone 46-49 zu verschiedenen Zeiten von der auf die Erdoberfläche auftreffenden Körperschall-Bugwelle erregt.

Mit der obigen Anordnung wird der Körperschall in vier Punkten $P_1$ bis $P_4$ der Körperschall-Oberflächenlinie

36' erfaßt. Sobald eines der Mikrophone als erstes anspricht (im dargestellten Fall ist dies das Mikrophon 48), wird in der Signalauswerte- und Recheneinheit 30 eine Zeitmessung gestartet, durch die die Zeitverzögerungen ermittelt werden, mit denen die anderen drei Mikrophone 46,47 und 49 ansprechen. Bei bekannter Geschwindigkeit v des Körperschalls in der Leitung lassen sich die in Fig. 3 dargestellten Strecken $s_1, s_2$ und $s_4$ als Produkt aus der Geschwindigkeit v und der jeweiligen Zeitverzögerung $t_1, t_2$ und $t_4$ ermitteln ($t_3$ ist genauso wie $s_3$ gleich Null). Damit sind aber auch die Punkte $P_1$ bis $P_4$ auf der Erdoberfläche bekannt, die auf der Körperschall-Oberflächenlinie 36' liegen, wobei der Punkt $P_3$ dem "Standort" des als erstes erregten Mikrophons 48 und die Punkte $P_1, P_2$ und $P_4$ den Standorten der Mikrophone 46,47 bzw. 48 um die Strecken $s_1, s_2$ bzw. $s_4$, in Impulsausbreitungsrichtung betrachtet, vorgelagert sind.

Es sei angenommen, daß die beiden Mikrophonpaare einen solchen Abstand voneinander aufweisen, daß sie die Hyperbeläste 50,51 der Körperschall-Oberflächenlinie 36' in denjenigen Bereichen erfassen, in denen die Hyperbel annähernd asymptotisch verläuft. Damit liegt der Schnittpunkt 42 der durch die Punkte $P_1$ und $P_2$ verlaufenden Geraden 52 mit der durch die Punkte $P_3$ und $P_4$ verlaufenden Geraden 53 über der zu ortenden Leitung. Dieser Schnittpunkt 42 liegt auf einer zur Meßlatte 44 parallelen Geraden, die in einem Abstand y zur Meßlatte 44 verläuft. Bei Anwendung der Strahlensatz-Gesetze gelten folgende Gleichungen:

$$\frac{s_1 + y}{x} = \frac{s_2 + y}{x - M} \quad (1)$$

$$\frac{s_4 + y}{L - x} = \frac{s_3 + y}{L - x - M} \quad (2)$$

wobei x der in Fig. 3 eingezeichnete Abstand des Mikrophons 46 von der Symmetrieachse 54 der Hyperbel (Körperschall-Oberflächenlinie 36') ist (In dem in Fig. 3 dargestellten Fall ist $s_3 = 0$. Dennoch soll in der folgenden Rechnung $s_3$ berücksichtigt werden, um die Ergebnisformel auch dann zur Bestimmung des Schnittpunktes 42 verwenden zu können, wenn $s_3 \neq 0$ Null ist.).

Werden die Gleichungen (1) und (2) jeweils nach y aufgelöst, ergibt sich:

$$y = \frac{x(s_1 - s_2) - s_1 M}{M} \quad (3)$$

$$y = \frac{(L - x)(s_4 - s_3) - s_4 M}{M} \quad (4)$$

Durch Einsetzen der Gleichung (4) in Gleichung (3) und Auflösen nach x ergibt sich:

$$x = L \cdot \frac{1 + \dfrac{M}{L} \cdot \dfrac{s_1 - s_4}{s_4 - s_3}}{1 + \dfrac{s_1 - s_2}{s_4 - s_3}} \quad (5)$$

Da nicht die Strecken $s_1$ bis $s_4$ sondern die Zeitverzögerungen $t_1$ bis $t_4$ ($t_3 = 0$ s. oben) gemessen werden, ergibt sich bei bekannter Körperschallgeschwindigkeit v der Leitung

$$x = L \cdot \frac{1 + \dfrac{M}{L} \cdot \dfrac{t_1 - t_4}{t_4 - t_3}}{1 + \dfrac{t_1 - t_2}{t_4 - t_3}} \quad (6)$$

Anhand der Gleichung (6) kann also der Abstand x des Mikrophons 46 von der Symmetrieachse 54 der Hyperbel entlang der Meßlatte 44 und damit - bei geradlinigem Leitungsverlauf - ein Punkt auf der Erdoberfläche bestimmt werden, unter dem die Leitung verläuft. (Eine der Größen $t_1 - t_4$ ist gleich Null, da die Zeitmessung erst dann beginnt, wenn eines der vier Mikrophone angesprochen hat.) Durch Verschieben der Meßlatte werden mehrere derartiger Punkte auf der Erdoberfläche bestimmt, anhand derer sich der Verlauf einer geradlinigen Leitung ergibt. Bei (winkelförmigen) Richtungsänderungen des Leitungsverlaufs wird der Krümmungsbereich durch Extrapolation der geradlinigen Leitungsabschnitte vor und hinter der Krümmung rekonstruiert.

Wie oben beschrieben, läßt sich also (bei geradlinigem Leitungsverlauf) ein Leitungspunkt durch Messung der auf die Erdoberfläche auftreffenden Körperschallwelle mit Hilfe von vier Körperschallaufnehmern bestimmen, wobei die Leitung durch einen einzigen Schallimpuls angeregt wird.

Die obigen Herleitungen sind unter der Annahme gemacht, daß sich jeweils ein Mikrophonpaar links bzw. rechts von der zu ortenden Leitung befindet. Zu Beginn der Ortung ist die Lage der Leitung aber nicht bekannt, so daß bei einer Messung auch von dem Vorliegen dieser Bedingung nicht ausgegangen werden kann. Allerdings läßt das Rechenergebnis für den Abstand x darauf schließen, wie die Meßlatte 44 relativ zur Leitung positioniert ist. Erfassen nämlich sämtliche Mikrophone die Körperschallwelle an der Erdoberfläche lediglich auf einem Ast der Hyperbel (liegen also sämtliche Mikrophone links oder rechts von der Leitung), ergibt sich für den Abstand x ein mathematisch undefinierter Wert, da der Nenner des Bruchs in Gleichung (5) bzw. (6) zu Null wird. Dies resultiert daraus, daß die Abstände der Mikrophone der beiden Mikrophonpaare gleich sind und demzufolge gilt:

$$\frac{t_1 - t_2}{t_4 - t_3} = -1 \quad (7)$$

wenn die Hyperbel in ihren angenähert asymptotischen Bereichen erfaßt wird.

Wie oben dargelegt, beruht die Herleitung der Gleichung (5) bzw. (6) darauf, das die Mikrophone beide Hyperbeläste in deren angenähert asymptotischen Bereichen erfassen. Die Meß- bzw. Rechenfehler, die aufgrund dieser lediglich näherungsweise gültigen Annahme gemacht werden, heben sich dann auf, wenn die Meßlatte solange verschoben wird, bis sich

$$x = \frac{L}{2} \quad (8)$$

ergibt. In diesem Fall liegt nämlich der Schnittpunkt der angenommenen Asymptoten (die den Geraden 52 und 53 der Fig. 3 entsprechen) exakt auf der zu ortenden Leitung. Die tatsächlichen Asymptoten verlaufen in einem spitzeren Winkel zur Achse 54 als die Geraden 52 und 53. Gilt dagegen die obige Gleichung (8) nicht, befindet sich der Schnittpunkt neben der Leitung, da die Gerade durch die ermittelten Punkte $P_1$ und $P_2$ in einem anderen Winkel zur Leitung verläuft, als die durch die Punkte $P_3$ und $P_4$ verlaufende Gerade. Das Meß- bzw. Rechenergebnis für den Wert x ist also umso exakter, je geringer die Abweichung des berechneten Wertes für x von dem Optimalwert gemäß Gleichung (8) ist.

**Patentansprüche**

1. Verfahren zur Ortung unterirdischer Leitungen, bei dem
   - die Leitung (14) oder das darin enthaltene Medium impulsartig mechanisch erregt wird und
   - auf der Erdoberfläche (12) mehrere Körperschallaufnehmer (24,26,28) angeordnet werden, mit denen die von einem zu ortenden Punkt (38) der Leitung (14) infolge der impulsartigen Erregung ausgehenden und bis zur Erdoberfläche (12) übertragenen Körperschallwellen detektiert werden,
   **dadurch gekennzeichnet,**
   - daß aus den von den Körperschallaufnehmern (24, 26,28) ausgegebenen Signalen Punkte auf der Erdoberfläche ermittelt werden, die auf einer Körperschall-Oberflächenlinie (36,36') liegen, entlang derer die von dem zu ortenden Punkt (38) der Leitung (14) ausgehenden Körperschallwellen die Erdoberfläche (12) durchdringen, und
   - daß anhand der so ermittelten Punkten der Körperschall-Oberflächenlinie (36,36') diejenige Stelle (42) der Erdoberfläche (12) ermittelt wird, unterhalb derer sich der zu ortende Punkt (38) der Leitung (14) befindet.

2. Verfahren nach Anspruch 1, dadurch gekennzeichnet, daß die Detektion der Körperschallwellen an der Erdoberfläche (12) mittels der Körperschallaufnehmer (24,26,28) nach jeweils einer impulsartigen Erregung der Leitung (14) erfolgt.

3. Verfahren nach Anspruch 1 oder 2, dadurch gekennzeichnet, daß die Lage einzelner Punkte auf der Erdoberfläche (12) ermittelt wird, aus denen der Verlauf der Körperschall-Oberflächenlinie (36,36') bestimmt wird.

4. Verfahren nach Anspruch 3, dadurch gekennzeichnet, daß die einzelnen Punkte auf der Erdoberfläche (12) anhand der relativen Positionen der Körperschallaufnehmer (24,26,28) untereinander und der Zeitdifferenz bestimmt werden, mit denen die die Detektion von Körperschallwellen anzeigenden Ausgangssignale der Körperschallaufnehmer (24,26,28) erzeugt werden.

5. Verfahren nach einem der Ansprüche 1 bis 4, dadurch gekennzeichnet, daß die Asymptoten der Körperschall-Oberflächenlinien (36,36') ermittelt werden, wobei der Schnittpunkt dieser Asymptoten gleich der Stelle (42) auf der Erdoberfläche (12) ist, unter der sich der zu ortende Punkt (38) der Leitung (14) befindet.

6. Verfahren nach einem der Ansprüche 1 bis 5, dadurch gekennzeichnet, daß als Körperschall-Oberflächenlinie (36,36') eine Hyperbel ermittelt wird, deren Scheitelpunkt sich über der Leitung (14) befindet.

7. Verfahren nach einem der Ansprüche 1 bis 6, dadurch gekennzeichnet, daß der Verlauf der Leitung (14) durch Ermittlung mehrerer Stellen (42) auf der Erdoberfläche (12) bestimmt wird, unterhalb derer die Lei-

EP 0 474 225 B1

tung (14) verläuft.

8. Verfahren nach Anspruch 7, dadurch gekennzeichnet, daß Richtungsänderungen des Leitungsverlaufs anhand der Ortung geradliniger Leitungsabschnitte durch Extrapolation ermittelt werden.

9. Verfahren nach einem der Ansprüche 1 bis 8, dadurch gekennzeichnet, daß ein erster, ein zweiter, ein dritter und ein vierter Körperschallaufnehmer (46-49) in definierten Abständen auf einer Geraden (44) angeordnet werden und daß anhand der relativen Positionen der Körperschallaufnehmer (46-49) untereinander und der Zeitdifferenzen zwischen den Ansprechzeitpunkten der Körperschallaufnehmer (46-49) der Schnittpunkt der Geraden (44) mit der Leitung (14) ermittelt wird.

10. Verfahren nach Anspruch 9, dadurch gekennzeichnet, daß der Schnittpunkt der Geraden (44) mit der Leitung (14) als Abstand (x) von dem ersten Körperschallaufnehmer (46) anhand folgender Gleichung ermittelt wird:

$$x = L \cdot \frac{1 + \dfrac{M}{L} \cdot \dfrac{t_1 - t_4}{t_4 - t_3}}{1 + \dfrac{t_1 - t_2}{t_4 - t_3}}$$

wobei L der Abstand des ersten Körperschallaufnehmers (46) zum von diesem am weitesten entfernt angeordneten vierten Körperschallaufnehmer (49) ist, M der Abstand des ersten Körperschallaufnehmers (46) vom zu diesen benachbarten zweiten Körperschallaufnehmer (47) und der Abstand des vierten Körperschallaufnehmers (49) vom zu diesen benachbarten dritten Körperschallaufnehmer (48) ist und $t_1$ bis $t_4$ die Ansprechzeitpunkte der vier Körperschallaufnehmer (46-49) sind.

**Claims**

1. A method for localizing subterranean pipes, wherein
   - said pipe (14) or the medium contained therein is excited mechanically in a pulse-like manner, and
   - a plurality of impact sound sensors (24, 26, 28) are arranged on the ground surface (12), by which to detect the impact sound waves that, due to the pulse-like excitation, come from a location (38) of the pipe (14) to be localized and are transmitted unto the ground surface (12),
   characterized in
   - that, from the signals outputted from said impact sound sensors (24, 26, 28), points on the ground surface are determined that lie on an impact sound surface line (36, 36′) along which the impact sound waves coming from said point (38) of the pipe (14) to be localized penetrate the ground surface (12), and
   - that, using the points of said impact sound surface line (36, 36′) thus deteermined, the location (42) on the ground surface (12) is determined below which the point (38) of the pipe (14) to be localized lies.

2. The method of claim 1, characterized in that detecting said impact sound waves at the ground surface (12) by means of said impact sound sensors (24, 26, 28) is performed after each pulse-like excitation of said pipe (14).

3. The method of claim 1 or 2, characterized in that the positions of individual points on the ground surface (12) are deteermined, from which positions the course of the impact sound surface line (36, 36′) is calculated.

4. The method of claim 3, characterized in that said individual points on the ground surface (12) are determined by the relative positions of said impact sound sensors (24, 26, 28) with respect to each other and by the difference in time with which the output signals of said impact sound sensors (24, 26, 28), representing the detection of impact sound waves, are generated.

5. The method of one of claims 1 to 4, characterized in that the asymptotic lines of said impact sound surface lines (36, 36′) are determined, the intersection of these asymptotic lines being the location (42) on the ground surface (12) below which the point (38) of the pipe (14) to be localized lies.

6. The method of one of claims 1 to 5, characterized in that a hyperbola is determined as said impact sound

8

surface line (36, 36′), the vertex of which is located above said pipe (14).

7. The method of one of claims 1 to 6, characterized in that the course of said pipe (14) is determined by detecting a plurality of locations (42) on the ground surface (12) below which the pipe (14) runs.

8. The method of claim 7, characterized in that changes of the direction of the pipe course are determined by extrapolation using the localization of straight pipe sections.

9. The method of one of claims 1 to 8, characterized in that a first, a second, a third and a fourth impact sound sensor (46-49) are arranged on a straight line (44) at defined distances from each other, and that the intersection of said straight line (44) with said pipe (14) is determined from the relative positions of said impact sound sensors (46-49) and the differences in time between the respective times of response of said impact sound sensors (46-49).

10. The method of claim 9, characterized in that the intersection of said straight line (44) and said pipe (14) is calculated from the following equation as the distance (x) from said first impact sound sensor (46):

$$x = L \cdot \frac{1 + \dfrac{M}{L} \cdot \dfrac{t_1 - t_4}{t_4 - t_3}}{1 + \dfrac{t_1 - t_2}{t_4 - t_3}}$$

where L is the distance of said first impact sound sensor (46) to said fourth impact sound sensor (49) farthest away from the same, M is the distance of said first impact sound sensor (46) to the adjacent second impact sound sensor (47) and the distance of said fourth impact sound sensor (49) to the third impact sound sensor (48) adjacent thereto, and $t_1$ to $t_4$ represent the response times of said four impact sound sensors (46-49).

**Revendications**

1. Procédé pour localiser des conduites souterraines, dans lequel
   - la conduite (14), ou le fluide y contenu, est excitée mécaniquement par impulsions, et
   - à la surface du sol (12) sont disposés plusieurs capteurs de bruit de corps (24, 26, 28) par lesquels sont détectées les ondes acoustiques de corps partant, par suite de l'excitation par impulsions, d'un point à localiser (38) de la conduite (14) et transmis à la surface du sol (12),
   caractérisé par le fait
   - qu'à partir des signaux émis par les capteurs de bruit de corps (24, 26, 28) on détermine des points à la surface du sol qui se situent sur une ligne de surface d'ondes acoustiques de corps (36, 36′) le long de laquelle les ondes acoustiques de corps partant du point à localiser (38) de la conduite (14) traversent la surface du sol (12), et
   - que sur la base des points de la ligne de surface d'ondes acoustiques de corps (36, 36′) ainsi définis, on détermine l'endroit (42) de la surface du sol (12) sous lequel se trouve le point à localiser (38) de la conduite (14).

2. Procédé selon la revendication 1, caractérisé par le fait que l'on effectue la détection des ondes acoustiques de corps à la surface du sol (12) à l'aide des capteurs de bruit de corps (24, 26, 28) après chaque excitation par impulsion de la conduite (14).

3. Procédé selon la revendication 1 ou 2, caractérisé par le fait que l'on détermine la position de différents points à la surface du sol (12) à partir desquels est défini le tracé de la ligne de surface d'ondes acoustiques de corps (36, 36′).

4. Procédé selon la revendication 3, caractérisé par le fait que l'on détermine les différents points à la surface du sol (12) sur la base des positions relatives des capteurs de bruit de corps (24, 26, 28) l'un par rapport à l'autre et que l'on détermine la différence de temps avec laquelle sont générés les signaux de sortie des capteurs de bruit de corps (24, 26, 28) indiquant la détection d'ondes acoustiques de corps.

5. Procédé selon l'une des revendications 1 à 4, caractérisé par le fait que l'on détermine les asymptotes des lignes de surface d'ondes acoustiques de corps (36, 36′), le point d'intersection de ces asymptotes étant exactement à l'endroit (42) à la surface du sol (12) sous lequel se trouve le point à localiser (38) de la conduite (14).

6. Procédé selon l'une des revendications 1 à 5, caractérisé par le fait que l'on détermine comme ligne de surface d'ondes acoustiques de corps (36, 36') une hyperbole dont le sommet se trouve au-dessus de la conduite (14).

7. Procédé selon l'une des revendications 1 à 6, caractérisé par le fait que le tracé de la conduite (14) est défini en déterminant plusieurs endroits (42) à la surface du sol (12) sous lesquels passe la conduite (14).

8. Procédé selon la revendication 7, caractérisé par le fait que les changements de direction dans le tracé de la conduite sont déterminés par extrapolation sur la base de la localisation de tronçons de conduite rectilignes.

9. Procédé selon l'une des revendications 1 à 8, caractérisé par le fait qu'un premier, un second, un troisième et un quatrième capteurs de bruit de corps (46 à 49) sont disposés à des distances déterminées sur une droite (44) et que le point d'intersection de la droite (44) avec la conduite (14) est déterminé sur la base des positions relatives des capteurs de bruit de corps (46 à 49) l'un par rapport à l'autre et des différences de temps entre les moments de réponse des capteurs de bruit de corps (46 à 49).

10. Procédé selon la revendication 9, caractérisé par le fait que le point d'intersection de la droite (44) avec la conduite (14) est déterminé par sa distance (x) par rapport au premier capteur de bruit de corps (46), à l'aide de l'équation suivante :

$$x = L \cdot \frac{1 + \dfrac{M}{L} \cdot \dfrac{t_1 - t_4}{t_4 - t_3}}{1 + \dfrac{t_1 - t_2}{t_4 - t_3}}$$

où L est la distance du premier capteur de bruit de corps (46) par rapport au quatrième capteur de bruit de corps (49) disposé à l'endroit le plus éloigné de celui-ci, M est la distance du premier capteur de bruit de corps (46) par rapport au second capteur de bruit de corps (47) le plus voisin de celui-ci et la distance du quatrième capteur de bruit de corps (49) par rapport au troisième capteur de bruit de corps (48) le plus voisin de celui-ci et $t_1$ à $t_4$ sont les moments de réponse des quatre capteurs de bruit de corps (46 à 49).

# FIG.1

# FIG.2

FIG.3